# EUROPÄISCHE PATENTSCHRIFT

(11) **EP 2 995 776 B1**
(45) Veröffentlichungstag und Bekanntmachung des Hinweises auf die Patenterteilung: **21.02.2018**
(21) Anmeldenummer: 15183174.0
(22) Anmeldetag: 31.08.2015
(51) Int. Cl.: F01D 9/04

(54) **GEHÄUSEVORRICHTUNG EINES STRAHLTRIEBWERKS**
HOUSING DEVICE OF A JET ENGINE
DISPOSITIF DE CARTER POUR UN MOTEUR A REACTION

(30) Priorität: 09.09.2014 DE 102014112954
(43) Veröffentlichungstag der Anmeldung: 16.03.2016
(73) Patentinhaber: Rolls-Royce Deutschland Ltd & Co KG, 15827 Blankenfelde-Mahlow (DE)
(72) Erfinder: Henkel, Martin, 12355 Berlin (DE); Sola-Pardo, Igor, 10965 Berlin (DE); Manig, Matthias, 03253 Doberlug-Kirchhain (DE)
(74) Vertreter: Schmidt, Martin Michael

(56) Entgegenhaltungen:
- US-A1- 2002 148 216
- US-A1- 2005 022 501
- US-A1- 2011 073 745
- US-A1- 2013 177 410

## Beschreibung

Die Erfindung betrifft eine Gehäusevorrichtung eines Strahltriebwerks mit einer radial inneren Gehäuseeinrichtung und einer radial äußeren Gehäuseeinrichtung gemäß der im Oberbegriff des Patentanspruches 1 näher definierten Art.

Aus der Praxis bekannte Strahltriebwerke weisen mehrere separate Gehäuseteile auf, die bei einer Montage des Strahltriebwerks in axialer Richtung des Strahltriebwerks miteinander in Wirkverbindung gebracht werden. Derartige Gehäuseteile sind beispielsweise als Einlaufgehäuse, Fangehäuse, Zwischengehäuse, Verbrennungsgehäuse oder dergleichen ausgeführt, die in der aufgezählten Reihenfolge ausgehend von einem stromaufseitigen Endbereich des Strahltriebwerks in Richtung eines stromabseitigen Endbereichs des Strahltriebwerks angeordnet sind.

Das Zwischengehäuse ist dabei mit vier ringförmigen, im Wesentlichen konzentrisch zueinander angeordneten Gehäuseteilen ausgeführt, wobei zwischen zwei radial inneren Gehäuseteilen im Wesentlichen in radialer Richtung Strukturschaufeln angeordnet sind und von diesen Gehäuseteilen zumindest bereichsweise ein Kernstromkanal des Strahltriebwerks begrenzt ist. Im Wesentlichen in radialer Richtung zwischen den zwei äußeren ringförmigen Gehäuseteilen sind aerodynamische Schaufeln angeordnet, wobei diese Gehäuseteile einen Nebenstromkanal des Strahltriebwerks begrenzen. Von einander zugewandten Flächen der beiden in radialer Richtung mittleren Gehäuseteile wird eine sogenannte Torsionsbox gebildet.

Bei bekannten Strahltriebwerken ist das Zwischengehäuse als ein einteiliges bzw. einstückiges Gussbauteil ausgeführt. Eine derartige einteilige Ausführung des Zwischengehäuses ist nachteilhafterweise schwierig und aufwändig herzustellen, da vorzusehende Hohlräume, beispielsweise im Bereich einer sogenannten Torsionsbox, in einem Bereich zwischen dem Nebenstromkanal und dem Kernstromkanal schwer zugänglich sind und nur mit entsprechend komplex auszuführenden Kernen zu fertigen sind. Aufgrund von Verdeckungen können bei derartigen einteiligen Zwischengehäusen zusätzlich Bereiche vorliegen, die nicht in gewünschtem Umfang gestaltet werden können. Weiterhin ist das Zwischengehäuse bei einer derartigen Herstellung aus einem einzigen Werkstoff zu fertigen, so dass bezüglich der verschiedenen Materialanforderungen in den einzelnen Gehäusebereichen unter Umständen große Kompromisse eingegangen werden müssen.

Eine derartig ausgeführte Gehäusevorrichtung ist beispielsweise in der US 2013/0177410 A1 beschrieben.

Aus der Praxis ist es zudem bekannt, Zwischengehäuse aus einer Vielzahl von Einzelbauteilen zusammenzusetzen, wobei beispielsweise die Gehäuseteile und die Schaufeln jeweils als Einzelteile gefertigt werden. Bei derartig ausgeführten Zwischengehäusen ist allerdings die Montage sehr aufwändig.

Aus der US 2002/0148216 A1 ist ein Zweikreis-Triebwerk mit einer Primärstrombahn und einer Mantelstrombahn bekannt, wobei ein zwischen den Strömungsbahnen befindliches Gehäuse von vorne nach hinten mit einem Strömungstrennschnabel, einem Aufbau-Zwischengehäuse und einem Stator eines Hochdruckverdichters ausgebildet ist. Das Zwischengehäuse weist eine Vielzahl von radialen Armen auf, um vom Gebläse erzeugte Kräfte über einen ringförmigen Teil des Zwischengehäuses auf durch die Mantelstrombahn verlaufende Stützstreben zu übertragen. Das Zwischengehäuse und in axialer Richtung durch das Zwischengehäuse verlaufende Leitungen sind als ein einziges Gussstück ausgeführt.

Es ist Aufgabe der vorliegenden Erfindung, eine Gehäusevorrichtung eines Strahltriebwerks zu schaffen, die einfach herzustellen ist und keine aufwändige Montage nach sich zieht.

Erfindungsgemäß wird diese Aufgabe mit einer Gehäusevorrichtung mit den Merkmalen des Patentanspruches 1 gelöst.

Es wird eine Gehäusevorrichtung eines Strahltriebwerks mit einer radial inneren Gehäuseeinrichtung und einer radial äußeren Gehäuseeinrichtung vorgeschlagen, wobei die innere Gehäuseeinrichtung mit einem radial inneren ringförmigen Gehäuseteil und einem radial äußeren ringförmigen Gehäuseteil ausgeführt ist, die in Einbaulage der Gehäusevorrichtung zumindest bereichsweise einen Kernstromkanal des Strahltriebwerks begrenzen, und wobei die innere Gehäuseeinrichtung mehrere sich im Wesentlichen in radialer Richtung der Gehäusevorrichtung zwischen dem inneren Gehäuseteil und dem äußeren Gehäuseteil erstreckende Schaufeln aufweist, wobei die radial äußere Gehäuseeinrichtung mit einem radial inneren ringförmigen Gehäuseteil und einem radial äußeren ringförmigen Gehäuseteil teil ausgeführt ist, die in Einbaulage der Gehäusevorrichtung zumindest bereichsweise einen Nebenstromkanal des Strahltriebwerks begrenzen, und wobei die äußere Gehäuseeinrichtung mehrere sich im Wesentlichen in radialer Richtung der Gehäusevorrichtung zwischen dem inneren Gehäuseteil und dem äußeren Gehäuseteil erstreckende Schaufeln aufweist, wobei die innere Gehäuseeinrichtung als ein erstes einstückiges Gussbauteil ausgebildet ist.

Erfindungsgemäß ist die äußere Gehäuseeinrichtung als ein zweites einstückiges Gussbauteil ausgebildet.

Die erfindungsgemäße Gehäusevorrichtung ist gegenüber bekannten einteilig gegossenen Gehäusevorrichtungen vorteilhafterweise einfacher und gewichtsoptimiert herzustellen und durch die lediglich zweiteilige Ausführung dennoch auf einfache Weise zu montieren. Die einfache Herstellbarkeit der Gehäusevorrichtung resultiert insbesondere aus der besseren Zugänglichkeit der zweiteiligen Ausführung in einem Verbindungsbereich der beiden Gehäuseeinrichtungen, so dass gegenüber einer einteiligen Ausführung der Gehäusevorrichtung einfachere Kerne für den Gießvorgang eingesetzt und fixiert werden können. Insgesamt ist durch die reduzierte Größe auch das Risiko von unerwünschten Fehlgüssen gegenüber der einteiligen Gussherstellung reduziert.

Durch die gegenüber bekannten einteiligen Ausführungen gute Zugänglichkeit des Verbindungsbereichs der Gehäuseeinrichtungen kann die im Verbindungsbereich gebildete, als Torsionsbox bezeichnete Struktur hinsichtlich ihrer Formgebung optimiert werden. Darüber hinaus ist es beispielsweise nicht erforderlich, dass Strukturaufgaben übernehmende Schaufeln zur Erzielung einer ausreichenden Festigkeit im Bereich der Torsionsbox durch einen Kernstromkanal, die Torsionsbox und einen Nebenstromkanal durchgängig hindurchgeführt werden. Weiterhin sind die einzelnen Gehäuseeinrichtungen der erfindungsgemäßen Gehäusevorrichtung einfacher nachzubearbeiten als eine einteilig ausgeführte Gehäusevorrichtung.

Die erfindungsgemäße Gehäusevorrichtung hat zudem den Vorteil, dass gegenüber einer einteiligen Gussausführung verschiedene Materialien für die innere Gehäuseeinrichtung und die äußere Gehäuseeinrichtung verwendet werden können und somit die für die jeweils zu erfüllenden Aufgaben, die sich für die innere und die äußere Gehäuseeinrichtung voneinander unterscheiden, optimale Materialkombination gewählt werden kann.

Auch eine Montage eines mit der erfindungsgemäßen Gehäusevorrichtung ausgeführten Strahltriebwerks ist sehr einfach durchführbar, da die innere Gehäuseeinrichtung als Basis für die Montage weiterer Komponenten vorgesehen werden kann und die äußere Gehäuseeinrichtung erst nach der Montage weiterer Elemente zu einem späteren Zeitpunkt mit der inneren Gehäuseeinrichtung verbunden werden kann. Hierdurch wird eine gute Zugänglichkeit der inneren Gehäuseeinrichtung für die Anbindung der weiteren Elemente des Strahltriebwerks an die innere Gehäuseeinrichtung sichergestellt und die Montage dieser Elemente wird durch die äußere Gehäuseeinrichtung nicht behindert. Zudem ist durch die erfindungsgemäß geteilte Ausführung der Gehäusevorrichtung ein gegebenenfalls nach einem Betrieb des Strahltriebwerks erforderlicher Austausch der äußeren Gehäuseeinrichtung ebenfalls entsprechend einfach durchführbar, da nicht die gesamte Gehäusevorrichtung entfernt werden muss.

Die erfindungsgemäße Gehäusevorrichtung eignet sich insbesondere für einen Einsatz bei Triebwerken mit einem Schub in der Größenordnung von bis zu 200 kN.

Bei einer vorteilhaften Ausführung der erfindungsgemäßen Gehäusevorrichtung ist es vorgesehen, dass die innere Gehäuseeinrichtung mit einem Leichtmetallwerkstoff, insbesondere einem Magnesiumwerkstoff, einem Titanwerkstoff oder einem Aluminiumwerkstoff, ausgeführt ist. Wenn ein Magnesiumwerkstoff verwendet wird, kann die innere Gehäuseeinrichtung besonders kostengünstig hergestellt werden und ist besonders leicht ausführbar. Eine mit einem Titanwerkstoff ausgeführte innere Gehäuseeinrichtung ist dagegen teurer in der Herstellung, zieht aber geringere Folgekosten nach sich. Unabhängig von der Wahl des Werkstoffs weist die innere Gehäuseeinrichtung vorzugsweise Befestigungseinrichtungen zur Anbindung einer inneren Getriebeeinrichtung, auch als Internal Gear Box bezeichnet, und für Hauptlager des Triebwerks auf.

Die äußere Gehäuseeinrichtung kann bei einer vorteilhaften Gehäusevorrichtung nach der Erfindung mit einem Leichtmetallwerkstoff, insbesondere einem Magnesiumwerkstoff, einem Aluminiumwerkstoff oder einem Titanwerkstoff, oder mit einem Verbundwerkstoff, beispielsweise faserverstärkter Kunststoff, ausgeführt sein, da im Bereich der äußeren Gehäuseeinrichtung im Vergleich zu der inneren Gehäuseeinrichtung geringere Betriebstemperaturen vorliegen.

Wenn die innere Gehäuseeinrichtung und die äußere Gehäuseeinrichtung mit dem gleichen oder einem ähnlichen Werkstoff ausgebildet sind, weisen diese auch gleiche oder ähnliche Ausdehnungskoeffizienten auf. Dann ist ein Zusammenwirken der inneren und äußeren Gehäuseeinrichtung in einem Verbindungsbereich der Gehäuseeinrichtungen über den gesamten Betriebstemperaturbereich unproblematisch. Bestehen die Gehäuseeinrichtungen aus verschiedenen Werkstoffen, besteht die Möglichkeit, die für die jeweilige Gehäuseeinrichtung die größten Vorteile bietende Werkstoffvariante unter Berücksichtigung der Ausdehnungskoeffizienten auszuwählen.

Die innere Gehäuseeinrichtung und die äußere Gehäuseeinrichtung sind insbesondere über eine Verbindungsvorrichtung miteinander verbunden, wobei die innere Gehäuseeinrichtung und die äußere Gehäuseeinrichtung jeweils eine Verbindungseinrichtung der Verbindungsvorrichtung aufweisen. Die Verbindungsvorrichtung ist beispielsweise als Flanschvorrichtungen ausgeführt und derart geformt, dass von der inneren Gehäuseeinrichtung und der äußeren Gehäuseeinrichtung im Bereich der Verbindungsvorrichtung ein umlaufender Ring, eine sogenannte Torsionsbox gebildet wird, die ein geschlossenes Profil beispielsweise mit einem im Wesentlichen viereckigen Querschnitt aufweist. Der umlaufende Ring ist dabei durch eine radial äußere Fläche der inneren Gehäuseeinrichtung und radial innere Fläche der äußeren Gehäuseeinrichtung begrenzt.

Um eine Montage der Gehäusevorrichtung einfach durchführen zu können, weist die Verbindungseinrichtung der inneren Gehäuseeinrichtung und der äußeren Gehäuseeinrichtung jeweils einen in Einbaulage der Gehäusevorrichtung stromauf liegenden Verbindungsbereich und einen stromab liegenden Verbindungsbereich auf, wobei der stromauf liegende Verbindungsbereich der inneren Gehäuseeinrichtung einen gegenüber dem stromab liegenden Verbindungsbereich der inneren Gehäuseeinrichtung geringeren Außendurchmesser und der stromauf liegende Verbindungsbereich der äußeren Gehäuseeinrichtung einen gegenüber dem stromab liegenden Verbindungsbereich der äußeren Gehäuseeinrichtung geringeren Innendurchmesser aufweist. Hierdurch kann die äußere Gehäuseeinrichtung bei der Montage auf einfache Weise in axialer Richtung auf die innere Gehäuseeinrichtung aufgeschoben und an diese angebunden werden.

Bei einer vorteilhaften Ausführung der erfindungsgemäßen Gehäusevorrichtung ist es zur Erzielung einer einfachen Festlegung der Gehäuseeinrichtungen aneinander und zur Ermöglichung eines einfachen Austauschs der äußeren Gehäuseeinrichtung vorgesehen, dass die innere Gehäuseeinrichtung und die äußere Gehäuseeinrichtung über eine lösbare Verbindung, insbesondere eine Schraubverbindung oder dergleichen, miteinander verbunden sind. Hierzu können beispielsweise im Bereich der Flanscheinrichtungen umfangsseitig verteilt angeordnete Befestigungspunkte für Schrauben vorgesehen sein.

Alternativ oder zusätzlich hierzu können die innere Gehäuseeinrichtung und die äußere Gehäuseeinrichtung auch über wenigstens eine Schweißverbindung miteinander verbunden sein, wobei eine Schweißverbindung besonders einfach herzustellen ist, wenn die innere Gehäuseeinrichtung und die äußere Gehäuseeinrichtung aus identischen oder ähnlichen Werkstoffen besteht.

Der äußere Gehäuseteil der inneren Gehäuseeinrichtung und/oder der innere Gehäuseteil der äußeren Gehäuseeinrichtung weist bei einer vorteilhaften Ausführung der Gehäusevorrichtung nach der Erfindung wenigstens ein Versteifungselement auf. Hierdurch ist eine gewünscht hohe Steifigkeit im Bereich des umlaufenden Rings bzw. der Torsionsbox auf einfache Weise erzielbar. Das wenigstens eine Versteifungselement kann insbesondere an in radialer Richtung einander zugewandten Flächen der inneren Gehäuseeinrichtung und/oder der äußeren Gehäuseeinrichtung angeordnet sein und ist vorzugsweise an die jeweilige Gehäuseeinrichtung angegossen. Dies ist durch die geteilte Ausführung der Gehäusevorrichtung besonders einfach möglich, da die jeweiligen Bereiche der Gehäuseeinrichtungen bei der Herstellung einfach zugänglich sind. Das Versteifungselement kann beispielsweise als eine Verstrebung oder eine Rippe, insbesondere als ein sogenanntes grid-Rippenmuster, ausgeführt sein und/oder die Form einer Wabe oder eines Dreiecks aufweisen.

Bei einer vorteilhaften Ausführung der erfindungsgemäßen Gehäusevorrichtung weist die äußere Gehäuseeinrichtung wenigstens eine Anbindungsvorrichtung zum Koppeln des Strahltriebwerks an ein Flugzeug auf. Die Gehäusevorrichtung ist insbesondere Teil eines sogenannten case mounted-Triebwerks, d. h. einem Strahltriebwerk, das über die ein Zwischengehäuse darstellende Gehäusevorrichtung an einem Flugzeug angebunden ist. Bei derartigen Triebwerken wird ein Großteil der im Kernbereich des Strahltriebwerks auftretenden Kräfte durch das Zwischengehäuse über einen mit dem äußeren Gehäuseteil der äußeren Gehäuseeinrichtung in Wirkverbindung bringbaren Tragholm nach außen beispielsweise an eine Struktur eines Flugzeugs abgeleitet. Zusätzlich hierzu kann die äußere Gehäuseeinrichtung auch Anbindungspunkte zur Anbindung einer Hilfsgerätegetriebeeinrichtung aufweisen.

Wenn die äußere Gehäuseeinrichtung jeweils mehrere sich im Wesentlichen in radialer Richtung der Gehäusevorrichtung zwischen dem inneren Gehäuseteil und dem äußeren Gehäuseteil erstreckende Schaufeln aufweist, wobei nahezu alle Schaufeln im Wesentlichen baugleich ausgeführt sind, ist eine aus aerodynamischen und Festigkeitsgesichtspunkten vorteilhafte Gehäusevorrichtung geschaffen. Die Schaufeln sind in Umfangsrichtung der Gehäusevorrichtung vorzugsweise gleichmäßig verteilt, d. h. ein Abstand zwischen zwei jeweils benachbarten Schaufeln ist jeweils wenigstens annähernd konstant, wobei vorzugsweise etwa 20 Schaufeln vorgesehen sind. Grundsätzlich kann aber je nach Anwendungsfall auch eine andere Anzahl an Schaufeln zum Einsatz kommen. Die Schaufeln sind derart ausführbar, dass gegenüber bekannten Strahltriebwerken auf stromauf des Zwischengehäuses im Bereich des Nebenstromkanals angeordnete aerodynamische Schaufeln, sogenannte Fan Outlet Guide Vanes, verzichtet werden kann.

Alternativ hierzu kann es auch vorgesehen sein, dass die äußere Gehäuseeinrichtung jeweils mehrere sich im Wesentlichen in radialer Richtung der Gehäusevorrichtung zwischen dem inneren Gehäuseteil und dem äußeren Gehäuseteil erstreckende Strukturschaufeln und mehrere aerodynamische Schaufeln aufweist, wobei die Strukturschaufeln in axialer Richtung der Gehäusevorrichtung eine größere Länge als die aerodynamischen Schaufeln aufweisen. Durch die unterschiedlich ausgeführten aerodynamischen Schaufeln und Strukturschaufeln kann die Gehäusevorrichtung bezüglich der gewünschten aerodynamischen und strukturellen Eigenschaften besonders flexibel hergestellt werden. Die Verteilung der aerodynamischen Schaufeln und Strukturschaufeln kann dabei beliebig gewählt werden, wobei sich in Umfangsrichtung der Gehäusevorrichtung betrachtet vorzugsweise jeweils mehrere aerodynamische Schaufeln mit mehreren Strukturschaufeln abwechseln. Auch bei dieser Ausführung kann vorteilhafterweise auf stromauf des Zwischengehäuses im Bereich des Nebenstromkanals angeordnete aerodynamische Schaufeln, sogenannte Fan Outlet Guide Vanes, verzichtet werden.

Bei einer besonders vorteilhaften Ausführung der erfindungsgemäßen Gehäusevorrichtung liegen in Einbaulage der Gehäusevorrichtung sowohl stromauf liegende Enden der aerodynamischen Schaufeln als auch stromauf liegende Enden der Strukturschaufeln in einer senkrecht zu einer Mittelachse der Gehäusevorrichtung verlaufenden Querschnittsebene. Ein mit einer derartigen Gehäusevorrichtung ausgeführtes Strahltriebwerk ist gegenüber einem bekannten Strahltriebwerk mit aerodynamischen Schaufeln und Strukturschaufeln in einer Querschnittsebene aerodynamisch optimiert. Dadurch, dass die stromaufseitigen Enden sowohl der aerodynamischen Schaufeln als auch der Strukturschaufeln eine Querschnittsebene berühren, aber nicht durchdringen, ist ein Abstand sämtlicher Schaufeln von den Bläserschaufeln in axialer Richtung der Gehäusevorrichtung jeweils gleich, so dass eine Anregung des Bläsers durch die Schaufeln während eines Betriebs des Strahltriebwerks vorteilhafterweise vermieden ist.

Um die beschriebenen Vorteile zu erzielen, sind stromauf gewandte Vorderkanten der aerodynamischen Schaufeln und der Strukturschaufeln identisch ausgeführt, wobei die Vorderkanten sowohl der aerodynamischen Schaufeln als auch der Strukturschaufeln geradlinig ausgeführt sein können und die Querschnittsebene vorzugsweise über ihre gesamte radiale Erstreckung berühren. Alternativ hierzu können die Vorderkanten der aerodynamischen Schaufeln und der Strukturschaufeln auch vorzugsweise identisch konturiert ausgeführt sein und in radialer Richtung variierende axiale Erstreckungen aufweisen, wobei sämtliche stromaufseitigen Enden der jeweiligen Vorderkante der Schaufeln, d. h. die sich am weitesten in axialer Richtung stromauf gewandten Enden der jeweiligen Schaufeln, die Querschnittsebene berühren.

Auch wenn ein stromauf angeordneter Endbereich der Strukturschaufeln baugleich zu einem stromauf angeordneten ersten Drittel der in axialer Richtung am kürzesten ausgebildeten aerodynamischen Schaufel ausgeführt ist, wird durch die vorgeschlagene Gestaltung der stromaufseitigen Endbereiche der aerodynamischen Schaufeln und der Strukturschaufeln eine aerodynamische Optimierung erzielt, da hierdurch ebenfalls eine Anregung des Bläsers, die bei voneinander abweichender Gestaltung der stromaufseitigen Endbereiche der aerodynamischen Schaufeln und der Strukturschaufeln auftreten kann, sicher vermieden ist.

Die baugleich ausgeführten und stromauf angeordneten Endbereiche der Strukturschaufeln erstrecken sich bei einer vorteilhaften Ausführung der erfindungsgemäßen Gehäusevorrichtung über die gesamte axiale Länge der am kürzesten ausgebildeten aerodynamischen Schaufel. Es kann grundsätzlich auch vorgesehen sein, dass der baugleiche Endbereich der Strukturschaufeln und der aerodynamischen Schaufeln einen Zwischenwert zwischen einem Drittel und der vollständigen Länge der aerodynamischen Schaufel, beispielsweise ein Halb, zwei Drittel oder drei Viertel, aufweist.

Um ein möglichst geringes Gesamtgewicht der Gehäusevorrichtung bei erwünscht hohen Festigkeitswerten zu erzielen, ist es vorteilhaft, wenn eine Länge der Strukturschaufeln in axialer Richtung der Gehäusevorrichtung wenigstens 1,5-mal so lang ist wie die Länge der aerodynamischen Schaufeln in axialer Richtung der Gehäusevorrichtung.

Je größer das Verhältnis der Länge der Strukturschaufeln zu der Länge der aerodynamischen Schaufeln in axialer Richtung der Gehäusevorrichtung ist, desto besser kann die Gehäusevorrichtung mit erwünscht hohen Festigkeitswerten ausgeführt werden. Die Strukturschaufeln können hierbei in axialer Richtung der Gehäusevorrichtung wenigstens doppelt so lang wie die aerodynamischen Schaufeln ausgeführt sein, aber beispielsweise auch dreimal oder viermal so lang. Das tatsächlich gewählte Längenverhältnis kann für den jeweiligen Anwendungsfall in Abwägung mit einem in axialer Richtung der Gehäusevorrichtung zur Verfügung stehenden Bauraum gewählt werden.

Es hat sich als besonders vorteilhaft erwiesen, wenn ein Verhältnis der Länge der Strukturschaufeln zu der Länge der aerodynamischen Schaufeln in axialer Richtung der Gehäusevorrichtung besonders groß ist. Die Strukturschaufeln können hierbei in axialer Richtung der Gehäusevorrichtung vorzugsweise doppelt so lang wie die aerodynamischen Schaufeln ausgeführt sein, aber beispielsweise auch dreimal oder viermal so lang. Das tatsächlich gewählte Längenverhältnis kann für den jeweiligen Anwendungsfall in Abwägung von Festigkeitsanforderungen mit einem in axialer Richtung der Gehäusevorrichtung zur Verfügung stehenden Bauraum gewählt werden.

Weitere Vorteile und vorteilhafte Ausführungsformen der erfindungsgemäßen Gehäusevorrichtung ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: eine schematisierte Längsschnittansicht eines stromaufseitigen Bereiches eines Strahltriebwerkes mit mehreren in axialer Richtung aneinander grenzenden Gehäuseelementen, wobei eine als Zwischengehäuse bezeichnete Gehäusevorrichtung ersichtlich ist;
- Fig. 2: eine vereinfachte Vorderansicht des Zwischengehäuses des Strahltriebwerkes der Fig. 1 in Alleinstellung;
- Fig. 3: eine vereinfachte perspektivische Ansicht des Zwischengehäuses des Strahltriebwerkes der Fig. 1 und Fig. 2, wobei das Zwischengehäuse teilweise aufgeschnitten gezeigt ist;
- Fig. 4: eine vereinfachte Seitenansicht des Zwischengehäuses des Strahltriebwerkes der Fig. 1 bis Fig. 3, wobei das Zwischengehäuse teilweise aufgeschnitten gezeigt ist;
- Fig. 5: eine vereinfachte Schnittdarstellung des Zwischengehäuses des Strahltriebwerkes der Fig. 1 bis Fig. 4 entlang einer Längsmittelebene des Zwischengehäuses; und
- Fig. 6: eine schematische Explosionsdarstellung des Zwischengehäuses des Strahltriebwerkes der Fig. 1 bis Fig. 5 in einer Seitenschnittansicht, wobei eine innere Gehäuseeinrichtung und eine äußere Gehäuseeinrichtung näher ersichtlich sind.

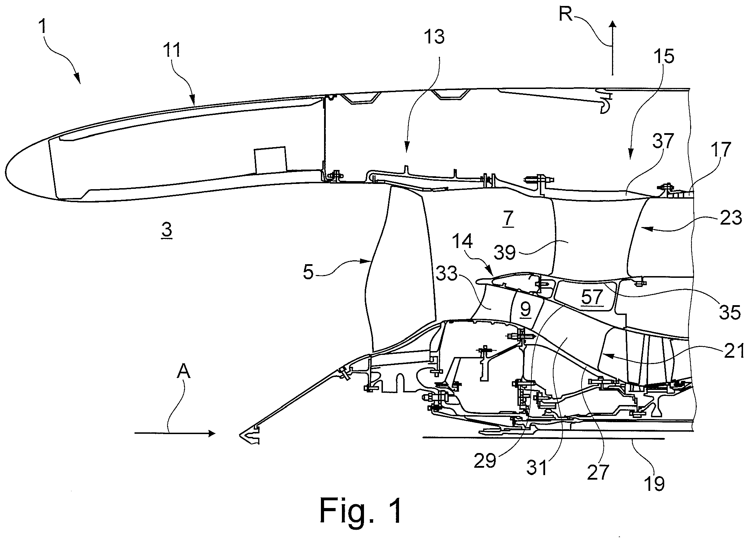

Fig. 1 zeigt in einer Längsschnittansicht einen Ausschnitt eines Strahltriebwerks bzw. Flugtriebwerks 1, mit dem ein Schub in der Größenordnung von bis zu 200 kN bereitstellbar ist. Das Strahltriebwerk 1 weist einen Einlaufbereich 3 auf, an den sich stromab ein Bläser 5 in an sich bekannter Art und Weise anschließt. Wiederum stromab des Bläsers 5 teilt sich ein Fluidstrom im Strahltriebwerk 1 in einen Nebenstrom und einen Kernstrom auf, wobei der Nebenstrom durch einen Nebenstromkanal 7 strömt und der Kernstrom durch einen Kernstromkanal 9 in einen Triebwerkskern geführt wird. Der Triebwerkskern ist in nicht näher dargestellter Art und Weise mit einer Verdichtereinrichtung, einem Brenner und einer Turbineneinrichtung ausgeführt.

Das Strahltriebwerk 1 umfasst mehrere, in axialer Richtung A des Strahltriebwerks 1 aneinander angrenzende und miteinander verbundene Gehäuseelemente. Der stromauf angeordnete Einlaufbereich 3 ist hierbei durch ein Einlaufgehäuse 11 gebildet, an das sich stromab ein in montiertem Zustand des Strahltriebwerks 1 den Bläser 5 einfassendes Bläsergehäuse 13 anschließt. Wiederum stromab des Bläsergehäuses 13 schließt sich eine als Zwischengehäuse ausgeführte Gehäusevorrichtung 15 an, an die stromab vorliegend ein Mantelstromgehäuse 17 angebunden ist.

Bei einer hierzu alternativen Ausführung der Erfindung kann das Strahltriebwerk hinsichtlich der Anzahl und Anordnung der Gehäuseelemente abweichend aufgebaut sein. Es können beispielsweise in axialer Richtung des Strahltriebwerks weniger oder mehr Gehäuseelemente als oben beschrieben vorgesehen sein. Zusätzlich besteht auch die Möglichkeit einzelne der oben beschriebenen Gehäuseelemente in axialer und/oder radialer Richtung des Strahltriebwerks auch mehrteilig auszuführen.

Das Strahltriebwerk 1 ist über das Zwischengehäuse 15 an ein Flugzeug anbindbar, so dass im Betrieb des Strahltriebwerks 1 auftretende Lasten über das Zwischengehäuse 15 zu einem nicht näher ersichtlichen, mit dem Zwischengehäuse 15 in Wirkverbindung bringbaren Tragholm des Strahltriebwerks 1 geführt und an eine Struktur des Flugzeugs abgeleitet werden. Ein derartiges Strahltriebwerk 1 wird auch als case mounted-Triebwerk bezeichnet.

Im Folgenden wird das Zwischengehäuse 15 des Strahltriebwerks 1 näher beschrieben, das sich von einer Mittelachse 19 des Strahltriebwerks 1 bzw. des Zwischengehäuses 15 in radialer Richtung R des Strahltriebwerks 1 nach außen erstreckt und von dem in radialer Richtung R zumindest ein Bereich des Kernstromkanals 9 als auch des Nebenstromkanals 7 begrenzt wird.

Das Zwischengehäuse 15 besteht aus zwei jeweils als einstückiges Gussbauteil ausgeführten Gehäuseeinrichtungen 21, 23, die bei der Montage des Strahltriebwerks 1 über eine unten näher beschriebene Verbindungsvorrichtung 25 miteinander verbunden werden. Die radial innere Gehäuseeinrichtung 21 weist einen inneren ringförmigen Gehäuseteil 27 und einen den inneren ringförmigen Gehäuseteil 27 in radialer Richtung R umfassenden äußeren ringförmigen Gehäuseteil 29 auf. Von einander zuweisenden Flächen der beiden Gehäuseteile 27, 29 wird ein Teil des Kernstromkanals 9 jeweils in radialer Richtung R begrenzt, wobei die Gehäuseteile 27, 29 im gezeigten Ausführungsbeispiel über zehn in den folgenden Figuren näher ersichtliche Schaufeln 31 miteinander verbunden sind. Die umfangsseitig insbesondere gleichmäßig verteilten Schaufeln 31, die auch als Struts bezeichnet werden, sind in einem stromaufseitigen Endbereich aerodynamisch geformt, und dienen insbesondere zur Übertragung von Lasten aus dem Kernbereich des Strahltriebwerks 1 radial nach außen. Zur Durchführung von Serviceleitungen von dem inneren Gehäuseteil 27 zu dem äußeren Gehäuseteil 29 und/oder zur Gewichtsreduktion besteht die Möglichkeit, dass eine, mehrere oder sämtliche der Schaufeln 31 hohl ausgeführt sind. Es kann zudem vorgesehen sein, dass der innere Gehäuseteil 27 eine Anbindungseinrichtung zur Anbindung einer inneren Getriebeeinrichtung, einer sogenannten Internal Gear Box, aufweist.

Neben den Schaufeln 31 der inneren Gehäuseeinrichtung 21 des Zwischengehäuses 15 sind in Fig. 1 stromauf hierzu im Bereich des Kernstromkanals 9 weitere Schaufeln 33 vorgesehen, die ebenfalls umfangsseitig verteilt angeordnet sind. Die weiteren Schaufeln 33 sind vorliegend Teil eines stromauf des Zwischengehäuses 15 angeordneten und mit diesem verbundenen Leitschaufelgehäuses 14.

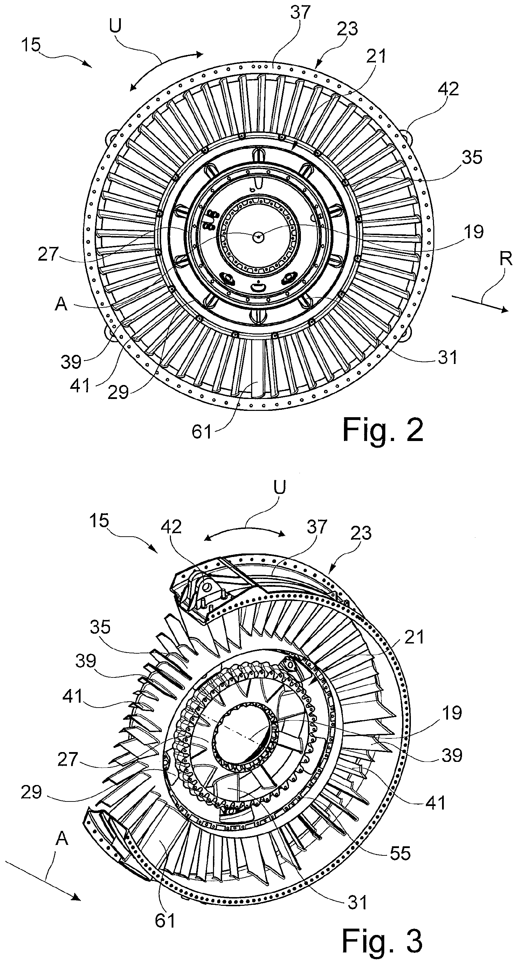

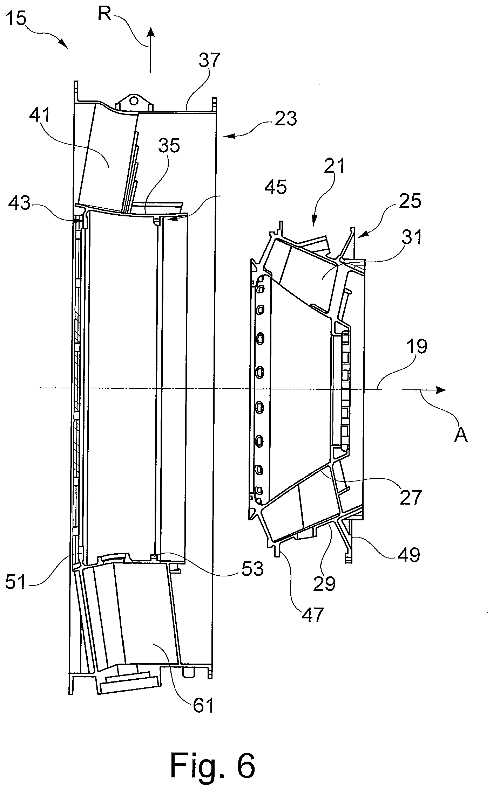

Die die innere Gehäuseeinrichtung 21 radial umfassende äußere Gehäuseeinrichtung 23 weist wie die innere Gehäuseeinrichtung 21 einen inneren ringförmigen Gehäuseteil 35 und einen den inneren Gehäuseteil 35 in radialer Richtung R umfassenden äußeren Gehäuseteil 37 auf, wobei von einander zuweisenden Flächen der Gehäuseteile 35, 37 ein Teil des Nebenstromkanals 7 in radialer Richtung R begrenzt wird. Der innere Gehäuseteil 35 und der äußere Gehäuseteil 37 sind wiederum über in den Fig. 2 bis 6 näher ersichtliche Schaufeln miteinander verbunden, wobei hierbei vorliegend verschiedenartig ausgeführte Schaufeln, nämlich einerseits Strukturschaufeln 39 und andererseits aerodynamische Schaufeln 41, vorgesehen sind. Sowohl die Strukturschaufeln 39 als auch die aerodynamischen Schaufeln 41 erfüllen jeweils aerodynamische und strukturelle Aufgaben und sind sowohl mit dem inneren Gehäuseteil 35 als auch mit dem äußeren Gehäuseteil 37 fest verbunden, so dass eine stabile Verbindung geschaffen ist und große Kräfte übertragen werden können.

Alternativ zu der gezeigten Ausführung kann es auch vorgesehen sein, dass sämtliche den inneren Gehäuseteil mit dem äußeren Gehäuseteil verbindende Schaufeln im Wesentlichen baugleich ausgeführt sind.

Zur Übertragung der während eines Betriebs im Kernbereich des Strahltriebwerks 1 auftretenden Kräfte und Belastungen nach radial außen im Bereich des Nebenstromkanals 7 sind lediglich in einem Querschnittsbereich des Zwischengehäuses 15 angeordnete Schaufeln 39, 41 erforderlich. Gegenüber bekannten Ausführungen, bei denen in einer Querschnittsebene im Bereich des Nebenstromkanals ausschließlich aerodynamische Schaufeln angeordnet sind und in einer Querschnittsebene stromab hierzu ausschließlich Strukturschaufeln angeordnet sind, integriert die gezeigte Ausführung Strukturschaufeln 39 und aerodynamische Schaufeln 41 in einem einzigen Querschnittsbereich des Strahltriebwerks 1. Dadurch ist das Strahltriebwerk 1 in axialer Richtung A sehr kurz ausführbar und es kann gegenüber der Ausführung mit in axialer Richtung A des Strahltriebwerks zueinander versetzt angeordneten Schaufeln gegebenenfalls eine, die weiteren Schaufeln umfassende Großkomponente, eingespart werden.

Das Strahltriebwerk 1 ist über eine mit dem äußeren Gehäuseteil 37 der äußeren Gehäuseeinrichtung 23 integral verbundene Anbindungsvorrichtung 42 an einem Flugzeug anbindbar. Neben der Anbindungsvorrichtung 42 kann die äußere Gehäuseeinrichtung 23 auch Anbindungspunkte zur Anbindung einer Hilfsgerätegetriebeeinrichtung aufweisen.

In Fig. 2 bis Fig. 6 ist das Zwischengehäuse 15 jeweils in Alleinstellung gezeigt, wobei der zweiteilige Aufbau des Zwischengehäuses 15 im Gegensatz zu der in diesem Bereich stark vereinfacht gezeigten Darstellung in der Fig. 1 mit der inneren Gehäuseeinrichtung 21 und der äußeren Gehäuseeinrichtung 23 näher ersichtlich ist.

Durch die geteilte Ausführung des Zwischengehäuses 15 mit der als einstückigem Gussbauteil ausgeführten inneren Gehäuseeinrichtung 21 und der ebenfalls als einstückigem Gussbauteil ausgeführten äußeren Gehäuseeinrichtung 23 können die Gehäuseeinrichtungen 21, 23 durch die gegenüber einem einteilig ausgeführten Zwischengehäuse weniger komplexe Formgebung insbesondere in einem Verbindungsbereich der Gehäuseeinrichtungen 21, 23, aber auch durch die jeweils kleinere und einfacher zugängliche Ausführung der Gehäuseeinrichtungen 21, 23 einfacher in einem Gussverfahren hergestellt werden. Zudem können grundsätzlich für die innere Gehäuseeinrichtung 21 und die äußere Gehäuseeinrichtung 23 jeweils an die zu erfüllenden Rahmenbedingungen angepasste Werkstoffe eingesetzt werden, wobei auch verschiedene Werkstoffe für die innere Gehäuseeinrichtung 21 und die äußere Gehäuseeinrichtung verwendet werden können. Vorliegend sind sowohl die innere Gehäuseeinrichtung 21 als auch die äußere Gehäuseeinrichtung 23 mit einem Titanwerkstoff ausgeführt.

Zur Verbindung der inneren Gehäuseeinrichtung 21 mit der äußeren Gehäuseeinrichtung 23 weisen die innere Gehäuseeinrichtung 21 und die äußere Gehäuseeinrichtung 23 jeweils eine als Flanscheinrichtung ausgeführte Verbindungseinrichtung 43 bzw. 45 der Verbindungsvorrichtung 25 auf, die jeweils einen stromauf angeordneten Verbindungsbereich und einen stromab angeordneten Verbindungsbereich umfassen. Ein stromauf liegender Verbindungsbereich 47 der inneren Gehäuseeinrichtung 21 weist dabei einen gegenüber dem stromab liegenden Verbindungsbereich 49 der inneren Gehäuseeinrichtung 21 geringeren Außendurchmesser auf. Dagegen ist ein stromauf liegender Verbindungsbereich 51 der äußeren Gehäuseeinrichtung 23 mit einem gegenüber einem stromab liegenden Verbindungsbereich 53 der äußeren Gehäuseeinrichtung 23 geringeren Innendurchmesser ausgeführt. Hierdurch kann die äußere Gehäuseeinrichtung 23 bei einer Montage des Strahltriebwerkes 1 auf einfache Weise in axialer Richtung A des Strahltriebwerks 1 von einer in Einbaulage der inneren Gehäuseeinrichtung 21 stromauf gewandten Seite auf die innere Gehäuseeinrichtung 21 aufgeschoben und an diese angebunden werden.

Zur Verbindung der inneren Gehäuseeinrichtung 21 mit der äußeren Gehäuseeinrichtung 23 sind vorliegend umfangsseitig verteilt angeordnete Befestigungsstellen sowohl im Bereich der stromauf gewandten Verbindungsbereiche 47, 51 als auch im Bereich der stromab gewandten Verbindungsbereiche 49, 53 vorgesehen, über die die Gehäuseeinrichtungen 21, 23 vorliegend über eine Schraubverbindung 55 aneinander festlegbar sind. Durch das Vorsehen einer derartigen lösbaren Verbindung ist einerseits eine Montage des Strahltriebwerks 1 und andererseits ein Austausch der äußeren Gehäuseeinrichtung 23 beispielsweise bei einer Beschädigung auf einfache Weise möglich, wobei bei einem Austausch der äußeren Gehäuseeinrichtung 23 im Unterschied zu einem einteilig ausgeführten Zwischengehäuse nicht das gesamte Strahltriebwerk 1 demontiert werden muss.

Alternativ oder zusätzlich hierzu können die innere Gehäuseeinrichtung 21 und die äußere Gehäuseeinrichtung 23 auch über eine Schweißverbindung miteinander verbunden sein.

Im Bereich der Verbindungsvorrichtung 25 des Zwischengehäuses 15 wird von dem äußeren Gehäuseteil 29 der inneren Gehäuseeinrichtung 21 und dem inneren Gehäuseteil 35 der äußeren Gehäuseeinrichtung 23 eine so genannte Torsionsbox 57 des Strahltriebwerks 1 gebildet. Die Torsionsbox 57 ist mit einem geschlossenen Profil ausgeführt, weist hier einen im Wesentlichen rechteckigen Querschnitt auf und umläuft die Mittelachse 19 des Strahltriebwerks 1 im Wesentlichen ringförmig. Durch die Aufteilung des Zwischengehäuses 15 in die innere Gehäuseeinrichtung 21 und die äußere Gehäuseeinrichtung 23 sind die in montiertem Zustand die Torsionsbox 57 bildenden Bereiche der Gehäuseeinrichtungen 21, 23 bei der Herstellung der jeweiligen Gehäuseeinrichtung 21, 23 einfach zugänglich, so dass sowohl der äußere Gehäuseteil 29 der inneren Gehäuseeinrichtung 21 als auch der innere Gehäuseteil 35 der äußeren Gehäuseeinrichtung 23 auf einfache Weise mit nicht näher ersichtlichen Versteifungselementen, Rippen, Verstrebungen oder dergleichen ausgeführt werden kann, um im Bereich der Torsionsbox 57 eine gewünscht hohe Steifigkeit zu erzielen. Die Versteifungselemente können auf einfache Weise bei der Herstellung der jeweiligen Gehäuseeinrichtung 21, 23 mitgegossen werden.

Im Folgenden wird näher auf den Aufbau, die Anordnung und die Verteilung der Strukturschaufeln 39 und der aerodynamischen Schaufeln 41 der äußeren Gehäuseeinrichtung 23 eingegangen, die vorliegend aus Vollmaterial mit einer im Wesentlichen konstanten Materialstärke von beispielsweise etwa 3 mm ausgeführt sind.

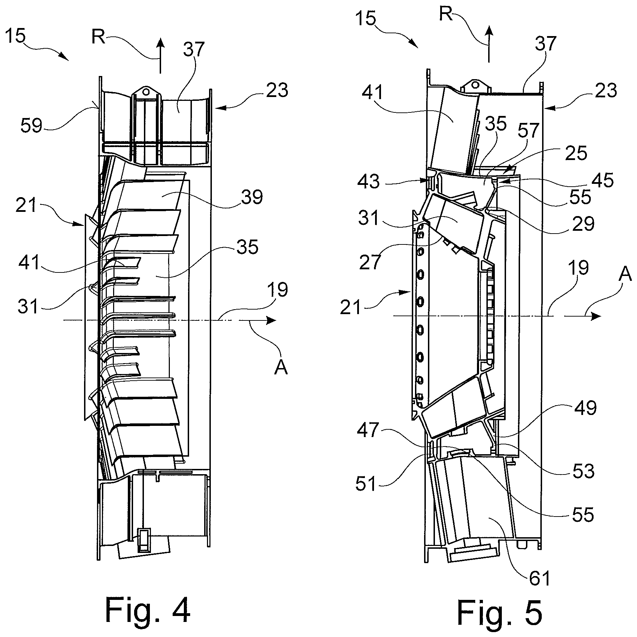

Beispielsweise in Fig. 4 ist ersichtlich, dass sämtliche Strukturschaufeln 39 baugleich ausgeführt sind. Ebenso sind sämtliche aerodynamische Schaufeln 41 baugleich ausgeführt. Weiter geht insbesondere aus Fig. 4 hervor, dass sowohl stromauf angeordnete Enden der Strukturschaufeln 39 als auch stromauf angeordnete Enden der aerodynamischen Schaufeln 41 jeweils vorzugsweise über ihre gesamte radiale Erstreckung direkt an eine einzige Querschnittsebene 59 des Zwischengehäuses 15 grenzen bzw. in der Querschnittsebene 59 liegen. Somit berühren sämtliche Strukturschaufeln 39 als auch sämtliche aerodynamische Schaufeln 41 die Querschnittsebene 59, durchdringen diese aber nicht. Die Schaufeln 39, 41 weisen alle in axialer Richtung A des Strahltriebwerks 1 in Strömungsrichtung betrachtet eine gemeinsame Startposition auf, wodurch ein Abstand zwischen den Vorderkanten der Schaufeln 39, 41 und den Schaufeln des Bläsers 5 im Betrieb des Strahltriebwerks 1 gleich ist und die Schaufeln des Bläsers 5 durch die Strukturschaufeln 39 sowie die aerodynamischen Schaufeln 41 nicht in unerwünschter Weise angeregt werden.

Dieser Effekt kann bei einer alternativen Ausführung der Erfindung auch dadurch erzielt werden, dass die aerodynamischen Schaufeln und die Strukturschaufeln im Bereich ihrer Vorderkanten konturiert mit in radialer Richtung unterschiedlichen axialen Erstreckungen ausgeführt sind, wobei ein sich am weitesten in axialer Richtung stromauf erstreckendes Ende der jeweiligen Schaufeln mit den entsprechenden Enden der anderen Schaufeln in einer Querschnittsebene liegt. Die Vorderkanten der Schaufeln sind dabei vorzugsweise identisch ausgeführt und angeordnet.

Wie ebenfalls in Fig. 4 ersichtlich ist, sind die Strukturschaufeln 39 in axialer Richtung A vorliegend etwa doppelt so lang wie die aerodynamischen Schaufeln 41 ausgeführt, wobei die Strukturschaufeln 39 eine axiale Länge von vorliegend etwa 200 mm und die aerodynamischen Schaufeln eine axiale Länge von vorliegend etwa 100 mm aufweisen. Durch diese Maßnahme werden Verluste minimiert und ein günstiges Verhältnis aus einem Gesamtgewicht des Zwischengehäuses 15 und einer gewünschten geringen Erstreckung des Zwischengehäuses 15 in axialer Richtung A des Strahltriebwerks 1 erreicht.

Zudem ist es vorgesehen, dass ein stromaufseitiger Endbereich der Strukturschaufeln 39 identisch zu der gesamten Ausführung der aerodynamischen Schaufeln 41 in axialer Richtung A ausgeführt ist. Ein derartig ausgeführtes Zwischengehäuse 15 ist im Betrieb des Strahltriebwerks 1 unter aerodynamischen Gesichtspunkten vorteilhaft.

Insbesondere der Fig. 3 und Fig. 4 ist weiterhin eine Verteilung der Strukturschaufeln 39 und der aerodynamischen Schaufeln 41 in Umfangsrichtung U des Zwischengehäuses 15 zu entnehmen, wobei Strukturschaufeln 39 vorzugsweise an den Stellen angeordnet sind, an denen große Lasten zu übertragen sind. Die Strukturschaufeln 39 und die aerodynamischen Schaufeln 41 können hierbei abwechselnd zueinander angeordnet sein. Vorliegend sind allerdings sowohl von den Strukturschaufeln 39 als auch von den aerodynamischen Schaufeln 41 bereichsweise jeweils mehrere, beispielsweise zwei, drei, vier oder mehrere gleichartige Schaufeln 39 bzw. 41 in Umfangsrichtung U nebeneinander angeordnet.

Neben den Strukturschaufeln 39 und den aerodynamischen Schaufeln 41 kann zudem eine weitere, hohl ausgeführte Schaufel 61, ein sogenannter King-Strut, vorgesehen sein, durch den beispielsweise eine Radialwelle einer Hilfsgerätegetriebeeinrichtung oder dergleichen aus einem Bereich der Torsionsbox 57 in Richtung des äußeren Gehäuseteils 37 der äußeren Gehäuseeinrichtung 23 führbar sind.

Bei einer vorteilhaften Ausführung der Erfindung können neben der gezeigten Verteilung von Strukturschaufeln 39 und aerodynamischen Schaufeln 41 insbesondere 40 aerodynamische Schaufeln und zwölf Strukturschaufeln inklusive des King-Struts vorgesehen sein, die entsprechend der vorliegenden Lasten über dem Umfang des Zwischengehäuses verteilt angeordnet sein können.

### Bezugszeichenliste

- 1: Strahltriebwerk
- 3: Einlaufbereich
- 5: Bläser
- 7: Nebenstromkanal
- 9: Kernstromkanal
- 11: Einlaufgehäuse
- 13: Bläsergehäuse
- 14: Leitschaufelgehäuse
- 15: Gehäusevorrichtung; Zwischengehäuse
- 17: Mantelstromgehäuse
- 19: Mittelachse
- 21: innere Gehäuseeinrichtung
- 23: äußere Gehäuseeinrichtung
- 25: Verbindungsvorrichtung
- 27: innerer Gehäuseteil der inneren Gehäuseeinrichtung
- 29: äußerer Gehäuseteil der inneren Gehäuseeinrichtung
- 31: Schaufeln der inneren Gehäuseeinrichtung
- 33: weitere Schaufeln
- 35: innerer Gehäuseteil der äußeren Gehäuseeinrichtung
- 37: äußerer Gehäuseteil der äußeren Gehäuseeinrichtung
- 39: Strukturschaufel
- 41: aerodynamische Schaufel
- 42: Anbindungsvorrichtung
- 43: Verbindungseinrichtung; Flanscheinrichtung
- 45: Verbindungseinrichtung; Flanscheinrichtung
- 47: Verbindungsbereich der inneren Gehäuseeinrichtung
- 49: Verbindungsbereich der inneren Gehäuseeinrichtung
- 51: Verbindungsbereich der äußeren Gehäuseeinrichtung
- 53: Verbindungsbereich der äußeren Gehäuseeinrichtung
- 55: Schraubverbindung
- 57: Torsionsbox
- 59: Querschnittsebene
- 61: Schaufel; King-Strut
- A: axiale Richtung der Gehäusevorrichtung
- R: radiale Richtung der Gehäusevorrichtung
- U: Umfangsrichtung der Gehäusevorrichtung

## Patentansprüche

1. Gehäusevorrichtung (15) eines Strahltriebwerks (1) mit einer radial inneren Gehäuseeinrichtung (21) und einer radial äußeren Gehäuseeinrichtung (23), wobei die innere Gehäuseeinrichtung (21) mit einem radial inneren ringförmigen Gehäuseteil (27) und einem radial äußeren ringförmigen Gehäuseteil (29) ausgeführt ist, die in Einbaulage der Gehäusevorrichtung (15) zumindest bereichsweise einen Kernstromkanal (9) des Strahltriebwerks (1) begrenzen, und wobei die innere Gehäuseeinrichtung (21) mehrere sich im Wesentlichen in radialer Richtung (R) der Gehäusevorrichtung (15) zwischen dem inneren Gehäuseteil (27) und dem äußeren Gehäuseteil (29) erstreckende Schaufeln (31) aufweist, wobei die radial äußere Gehäuseeinrichtung (23) mit einem radial inneren ringförmigen Gehäuseteil (35) und einem radial äußeren ringförmigen Gehäuseteil (37) ausgeführt ist, die in Einbaulage der Gehäusevorrichtung (15) zumindest bereichsweise einen Nebenstromkanal (7) des Strahltriebwerks (1) begrenzen, und wobei die äußere Gehäuseeinrichtung (23) mehrere sich im Wesentlichen in radialer Richtung (R) der Gehäusevorrichtung (15) zwischen dem inneren Gehäuseteil (35) und dem äußeren Gehäuseteil (37) erstreckende Schaufeln (39, 41) aufweist, wobei die innere Gehäuseeinrichtung (21) als ein erstes einstückiges Gussbauteil ausgebildet ist, **dadurch gekennzeichnet, dass** die äußere Gehäuseeinrichtung (23) als ein zweites einstückiges Gussbauteil ausgebildet ist.

2. Gehäusevorrichtung nach Anspruch 1, **dadurch gekennzeichnet, dass** die innere Gehäuseeinrichtung (21) mit einem Leichtmetallwerkstoff, insbesondere einem Magnesiumwerkstoff, einem Titanwerkstoff oder einem Aluminiumwerkstoff, ausgeführt ist.

3. Gehäusevorrichtung nach einem der Ansprüche 1 oder 2, **dadurch gekennzeichnet, dass** die äußere Gehäuseeinrichtung (23) mit einem Leichtmetallwerkstoff, insbesondere einem Magnesiumwerkstoff, einem Aluminiumwerkstoff oder einem Titanwerkstoff, oder mit einem Kompositwerkstoff ausgeführt ist.

4. Gehäusevorrichtung nach einem der Ansprüche 1 bis 3, **dadurch gekennzeichnet, dass** die innere Gehäuseeinrichtung (21) und die äußere Gehäuseeinrichtung (23) über eine Verbindungsvorrichtung (25) miteinander verbunden sind, wobei die innere Gehäuseeinrichtung (21) und die äußere Gehäuseeinrichtung (23) jeweils eine Verbindungseinrichtung (43, 45) der Verbindungsvorrichtung (25) aufweisen.

5. Gehäusevorrichtung nach Anspruch 4, **dadurch gekennzeichnet, dass** die Verbindungseinrichtungen (43, 45) der inneren Gehäuseeinrichtung (21) und der äußeren Gehäuseeinrichtung (23) jeweils einen in Einbaulage der Gehäusevorrichtung (15) stromauf liegenden Verbindungsbereich (47, 51) und einen stromab liegenden Verbindungsbereich (49, 53) aufweisen, wobei der stromauf liegende Verbindungsbereich (47) der inneren Gehäuseeinrichtung (21) einen gegenüber dem stromab liegenden Verbindungsbereich (49) der inneren Gehäuseeinrichtung (21) geringeren Außendurchmesser aufweist und der stromauf liegende Verbindungsbereich (51) der äußeren Gehäuseeinrichtung (23) einen gegenüber dem stromab liegenden Verbindungsbereich (53) der äußeren Gehäuseeinrichtung (23) geringeren Innendurchmesser aufweist.

6. Gehäusevorrichtung nach einem der Ansprüche 1 bis 5, **dadurch gekennzeichnet, dass** die innere Gehäuseeinrichtung (21) und die äußere Gehäuseeinrichtung (23) über eine lösbare Verbindung, insbesondere eine Schraubverbindung (55), miteinander verbunden sind.

7. Gehäusevorrichtung nach einem der Ansprüche 1 bis 6, **dadurch gekennzeichnet, dass** die innere Gehäuseeinrichtung (21) und die äußere Gehäuseeinrichtung (23) über eine Schweißverbindung miteinander verbunden sind.

8. Gehäusevorrichtung nach einem der Ansprüche 1 bis 7, **dadurch gekennzeichnet, dass** der äußere Gehäuseteil (29) der inneren Gehäuseeinrichtung (21) und/oder der innere Gehäuseteil (35) der äußeren Gehäuseeinrichtung (23) wenigstens ein Versteifungselement aufweist.

9. Gehäusevorrichtung nach einem der Ansprüche 1 bis 8, **dadurch gekennzeichnet, dass** die äußere Gehäuseeinrichtung (23) wenigstens eine Anbindungsvorrichtung (42) zum Koppeln des Strahltriebwerks (1) an ein Flugzeug aufweist.

10. Gehäusevorrichtung nach einem der Ansprüche 1 bis 9, **dadurch gekennzeichnet, dass** die äußere Gehäuseeinrichtung (23) jeweils mehrere sich im Wesentlichen in radialer Richtung (R) der Gehäusevorrichtung (15) zwischen dem inneren Gehäuseteil (35) und dem äußeren Gehäuseteil (37) erstreckende Schaufeln aufweist, wobei nahezu alle Schaufeln im Wesentlichen baugleich ausgeführt sind.

11. Gehäusevorrichtung nach einem der Ansprüche 1 bis 9, **dadurch gekennzeichnet, dass** die äußere Gehäuseeinrichtung (23) jeweils mehrere sich im Wesentlichen in radialer Richtung (R) der Gehäusevorrichtung (15) zwischen dem inneren Gehäuseteil (35) und dem äußeren Gehäuseteil (37) erstreckende Strukturschaufeln (39) und mehrere aerodynamische Schaufeln (41) aufweist; wobei die Strukturschaufeln (39) in axialer Richtung (A) der Gehäusevorrichtung (15) eine größere Länge als die aerodynamischen Schaufeln (41) aufweisen.

12. Gehäusevorrichtung nach einem der Ansprüche 10 oder 11, **dadurch gekennzeichnet, dass** in Einbaulage der Gehäusevorrichtung (15) sowohl stromauf liegende Enden der aerodynamischen Schaufeln (41) als auch stromauf liegende Enden der Strukturschaufeln (39) in einer senkrecht zu einer Mittelachse (19) der Gehäusevorrichtung verlaufenden Querschnittsebene (59) liegen.

13. Gehäusevorrichtung nach einem der Ansprüche 11 oder 12, **dadurch gekennzeichnet, dass** ein stromauf angeordneter Endbereich der Strukturschaufeln (39) baugleich zu einem stromauf angeordneten ersten Drittel der in axialer Richtung (A) am kürzesten ausgebildeten aerodynamischen Schaufel (41) ausgeführt ist.

14. Gehäusevorrichtung nach einem der Ansprüche 11 bis 13, **dadurch gekennzeichnet, dass** stromauf angeordnete Endbereiche der Strukturschaufeln (39) baugleich zu einem stromauf angeordneten Endbereich der aerodynamischen Schaufel (41) ausgeführt sind, die in axialer Richtung (A) am kürzesten ausgebildet ist, wobei sich die Endbereiche der Strukturschaufeln (39) wenigstens über ein erstes Drittel der gesamten axialen Länge der kürzesten aerodynamischen Schaufel (41) erstrecken.

15. Gehäusevorrichtung nach einem der Ansprüche 11 bis 14, **dadurch gekennzeichnet, dass** eine Länge der Strukturschaufeln (39) in axialer Richtung (A) der Gehäusevorrichtung (15) wenigstens 1,5-mal, insbesondere doppelt so lang wie eine Länge der aerodynamischen Schaufeln (41) in axialer Richtung (A) der Gehäusevorrichtung (15) ist.

## Claims

1. Casing device (15) of a jet engine (1), including a radially inner casing arrangement (21) and a radially outer casing arrangement (23), wherein the inner casing arrangement (21) is designed with a radially inner ring-shaped casing part (27) and a radially outer ring-shaped casing part (29), which in the installation position of the casing device (15) delimit a core-flow duct (9) of the jet engine (1) at least in certain areas, and wherein the inner casing arrangement (21) has multiple blades (31) extending substantially in the radial direction (R) of the casing device (15) between the inner casing part (27) and the outer casing part (29), wherein the radially outer casing arrangement (23) is designed with a radially inner ring-shaped casing part (35) and a radially outer ring-shaped casing part (37), which in the installation position of the casing device (15) delimit a bypass flow-duct (7) of the jet engine (1) at least in certain areas, and wherein the outer casing arrangement (23) has multiple blades (39, 41) extending substantially in the radial direction (R) of the casing device (15) between the inner casing part (35) and the outer casing part (37), wherein the inner casing arrangement (21) is designed as a first one-piece cast component, **characterized in that** the outer casing arrangement (23) is designed as a second one-piece cast component.

2. Casing device in accordance with Claim 1, **characterized in that** the inner casing arrangement (21) is made of a light metal material, in particular a magnesium material, a titanium material or an aluminum material.

3. Casing device in accordance with one of the Claims 1 or 2, **characterized in that** the outer casing arrangement (23) is made of a light metal material, in particular a magnesium material, an aluminum material or a titanium material, or of a composite material.

4. Casing device in accordance with one of the Claims 1 to 3, **characterized in that** the inner casing arrangement (21) and the outer casing arrangement (23) are connected to each other via a connection device (25), wherein the inner casing arrangement (21) and the outer casing arrangement (23) respectively include one connection arrangement (43, 45) of the connection device (25).

5. Casing device in accordance with Claim 4, **characterized in that** the connection arrangements (43, 45) of the inner casing arrangement (21) and of the outer casing arrangement (23) respectively have a connection area (47, 51) that is located upstream and a connection area (49, 53) that is located downstream in the installation position of the casing device (15), wherein the upstream connection area (47) of the inner casing arrangement (21) has a smaller outer diameter as compared to the downstream connection area (49) of the inner casing arrangement (21), and that the upstream connection area (51) of the outer casing arrangement (23) has a smaller inner diameter as compared to the downstream connection area (53) of the outer casing arrangement (23).

6. Casing device in accordance with one of the Claims 1 to 5, **characterized in that** the inner casing arrangement (21) and the outer casing arrangement (23) are connected to each other via a releasable connection, in particular a bolted connection (55).

7. Casing device in accordance with one of the Claims 1 to 6, **characterized in that** the inner casing arrangement (21) and the outer casing arrangement (23) are connected to each other via a welded joint.

8. Casing device in accordance with one of the Claims 1 to 7, **characterized in that** the outer casing part (29) of the inner casing arrangement (21) and/ or the inner casing part (35) of the outer casing arrangement (23) include(s) at least one stiffening element.

9. Casing device in accordance with one of the Claims 1 to 8, **characterized in that** the outer casing arrangement (23) includes at least one connecting device (42) for coupling the jet engine (1) to an aircraft.

10. Casing device in accordance with one of the Claims 1 to 9, **characterized in that** the outer casing arrangement (23) has multiple blades extending substantially in the radial direction (R) of the casing device (15) between the inner casing part (35) and the outer casing part (37), wherein almost all blades are designed substantially identical.

11. Casing device in accordance with one of the Claims 1 to 9, **characterized in that** the outer casing arrangement (23) has multiple structural blades (39) extending substantially in the radial direction (R) of the casing device (15) between the inner casing part (35) and the outer casing part (37), and multiple aerodynamic blades (41), wherein the structural blades (39) have a greater length in the axial direction (A) of the casing device (15) as compared to the aerodynamic blades (41).

12. Casing device in accordance with one of the Claims 10 or 11, **characterized in that** in the installation position of the casing device (15) both, the upstream ends of the aerodynamic blades (41) and the upstream ends of the structural blades (39) lie in a cross-sectional plane (59) that extends perpendicularly to a center axis (19) of the casing device.

13. Casing device in accordance with one of the Claims 11 or 12, **characterized in that** an upstreamly arranged end area of the structural blades (39) is designed identical to an upstreamly arranged first third of the aerodynamic blade (41) that is designed with the shortest length in the axial direction (A).

14. Casing device in accordance with one of the Claims 11 to 13, **characterized in that** upstreamly arranged end areas of the structural blades (39) are designed identical to an upstreamly arranged end area of the aerodynamic blade (41) that is designed with the shortest length in the axial direction (A), wherein the end areas of the structural blades (39) extend at least over a first third of the entire axial length of the shortest aerodynamic blade (41).

15. Casing device in accordance with one of the Claims 11 to 14, **characterized in that** a length of the structural blades (39) in the axial direction (A) of the casing device (15) is at least 1.5 times, in particular twice, the length of the aerodynamic blades (41) in the axial direction (A) of the casing device (15).

## Revendications

1. Dispositif de carter (15) d'un réacteur (1) présentant un agencement de carter radialement intérieur (21) et un agencement de carter radialement extérieur (23), sachant que l'agencement de carter intérieur (21) est conçu avec une partie de carter annulaire radialement intérieure (27) et une partie de carter annulaire radialement extérieure (29) qui délimitent au moins partiellement un canal de flux principal (9) du réacteur (1) en position de montage du dispositif de carter (15), et sachant que l'agencement de carter intérieur (21) présente plusieurs aubes (31) s'étendant essentiellement dans le sens radial (R) du dispositif de carter (15) entre la partie de carter intérieure (27) et la partie de carter extérieure (29), sachant que l'agencement de carter radialement extérieur (23) est conçu avec une partie de carter annulaire radialement intérieure (35) et une partie de carter annulaire radialement extérieure (37) qui délimitent au moins partiellement un canal de flux secondaire (7) du réacteur (1) en position de montage du dispositif de carter (15), et sachant que l'agencement de carter extérieur (23) présente plusieurs aubes (39, 41) s'étendant essentiellement dans le sens radial (R) du dispositif de carter (15) entre la partie de carter intérieure (35) et la partie de carter extérieure (37), sachant que l'agencement de carter intérieur (21) est conçu sous la forme d'une première pièce coulée d'un seul tenant, **caractérisé en ce que** l'agencement de carter extérieur (23) est conçu sous la forme d'une seconde pièce coulée d'un seul tenant.

2. Dispositif de carter selon la revendication n° 1, **caractérisé en ce que** l'agencement de carter intérieur (21) est constitué d'un matériau à base de métal léger, notamment un matériau de magnésium, un matériau de titane ou un matériau d'aluminium.

3. Dispositif de carter selon une des revendications n° 1 ou n° 2, **caractérisé en ce que** l'agencement de carter extérieur (23) est constitué d'un matériau à base de métal léger, notamment un matériau de magnésium, un matériau d'aluminium ou un matériau de titane, ou d'un matériau composite.

4. Dispositif de carter selon une des revendications n° 1 à n° 3, **caractérisé en ce que** l'agencement de carter intérieur (21) et l'agencement de carter extérieur (23) sont reliés entre eux par un dispositif de liaison (25), sachant que l'agencement de carter intérieur (21) et l'agencement de carter extérieur (23) présentent chacun un agencement de liaison (43, 45) du dispositif de liaison (25).

5. Dispositif de carter selon la revendication n° 4, **caractérisé en ce que** les agencements de liaison (43, 45) de l'agencement de carter intérieur (21) et de l'agencement de carter extérieur (23) présentent chacun, dans la position de montage du dispositif de carter (15), une zone de liaison située en amont (47, 51) et une zone de liaison située en aval (49, 53), sachant que la zone de liaison située en amont (47) de l'agencement de carter intérieur (21) présente un diamètre extérieur inférieur à la zone de liaison située en aval (49) de l'agencement de carter intérieur (21), et que la zone de liaison située en amont (51) de l'agencement de carter extérieur (23) présente un diamètre intérieur inférieur à la zone de liaison située en aval (53) de l'agencement de carter extérieur (23).

6. Dispositif de carter selon une des revendications n° 1 à n° 5, **caractérisé en ce que** le dispositif de carter intérieur (21) et le dispositif de carter extérieur (23) sont reliés entre eux par le biais d'une liaison détachable, notamment d'un raccord vissé (55).

7. Dispositif de carter selon une des revendications n° 1 à n° 6, **caractérisé en ce que** l'agencement de carter intérieur (21) et l'agencement de carter extérieur (23) sont reliés entre eux par le biais d'un joint soudé.

8. Dispositif de carter selon une des revendications n° 1 à n° 7, **caractérisé en ce que** la partie de carter extérieure (29) de l'agencement de carter intérieur (21) et/ ou la partie de carter intérieure (35) de l'agencement de carter extérieur (23) présente(nt) au moins un élément de renforcement.

9. Dispositif de carter selon une des revendications n° 1 à n° 8, **caractérisé en ce que** l'agencement de carter extérieur (23) présente au moins un dispositif de connexion (42) pour coupler le réacteur (1) à un avion.

10. Dispositif de carter selon une des revendications n° 1 à n° 9, **caractérisé en ce que** l'agencement de carter extérieur (23) présente plusieurs aubes s'étendant essentiellement dans le sens radial (R) du dispositif de carter (15) entre la partie de carter intérieure (35) et la partie de carter extérieure (37), sachant que presque toutes les aubes présentent essentiellement une construction identique.

11. Dispositif de carter selon une des revendications n° 1 à n° 9, **caractérisé en ce que** l'agencement de carter extérieur (23) présente plusieurs aubes structurales (39) s'étendant essentiellement dans le sens radial (R) du dispositif de carter (15) entre la partie de carter intérieure (35) et la partie de carter extérieure (37), et plusieurs aubes aérodynamiques (41), sachant que les aubes structurales (39) présentent une longueur supérieure aux aubes aérodynamiques (41) dans le sens axial (A) du dispositif de carter (15).

12. Dispositif de carter selon une des revendications n° 10 ou n° 11, **caractérisé en ce que**, dans la position de montage du dispositif de carter (15), aussi bien les extrémités en amont des aubes aérodynamiques (41) que les extrémités en amont des aubes structurales (39) se trouvent dans un plan de section transversal (59) s'étendant perpendiculairement à un axe médian (19) du dispositif de carter.

13. Dispositif de carter selon une des revendications n° 11 ou n° 12, **caractérisé en ce qu'**une zone d'extrémité des aubes structurales (39) disposée en amont présente la même construction qu'un premier tiers disposé en amont de l'aube aérodynamique (41) la plus courte dans le sens axial (A).

14. Dispositif de carter selon une des revendications n° 11 à n° 13, **caractérisé en ce que** les zones d'extrémité disposées en amont des aubes structurales (39) ont une construction identique à une zone d'extrémité disposée en amont de l'aube aérodynamique (41) qui est la plus courte dans le sens axial (A), sachant que les zones d'extrémité des aubes structurales (39) s'étendent au moins sur un premier tiers de la longueur axiale totale de l'aube aérodynamique la plus courte (41).

15. Dispositif de carter selon une des revendications n° 11 à n° 14, **caractérisé en ce qu'**une longueur des aubes structurales (39) est, dans le sens axial (A) du dispositif de carter (15), au moins 1,5 fois supérieure, notamment deux fois supérieure, à une longueur des aubes aérodynamiques (41) dans le sens axial (A) du dispositif de carter (15).
